# EUROPÄISCHE PATENTSCHRIFT

(11) **EP 3 529 406 B1**
(45) Veröffentlichungstag und Bekanntmachung des Hinweises auf die Patenterteilung: **26.05.2021**
(21) Anmeldenummer: 17809003.1
(22) Anmeldetag: 16.10.2017
(51) Int. Cl.: D04H 1/60, B29C 35/02, D04H 3/12, D01D 10/02, D01F 6/96

(54) **FUNKTIONSLAGENHERSTELLUNGSVERFAHREN, ZUGEHÖRIGE FUNKTIONSLAGE UND FASERVERBUNDWERKSTOFF**
FUNCTIONAL LAYER PRODUCTION METHOD, ASSOCIATED FUNCTIONAL LAYER AND FIBER-REINFORCED COMPOSITE MATERIAL
PROCÉDÉ DE FABRICATION DE COUCHES FONCTIONNELLES, COUCHE FONCTIONNELLE ET COMPOSITE RENFORCÉ DE FIBRES ASSOCIÉS

(30) Priorität: 18.10.2016 DE 102016119776
(43) Veröffentlichungstag der Anmeldung: 28.08.2019
(73) Patentinhaber: Sächsisches Textilforschungsinstitut e.V., 09125 Chemnitz (DE)
(72) Erfinder: THIELEMANN, Günther, 09114 Chemnitz (DE); TAUBNER, Ralf, 09127 Chemnitz (DE); HEYE, Ulrich, 09573 Augustusburg (DE)
(74) Vertreter: Steiniger, Carmen
(86) Internationale Anmeldenummer: PCT/IB2017/056394
(87) Internationale Veröffentlichungsnummer: WO 2018/073716

(56) Entgegenhaltungen:
- WO-A1-2015/176983
- DE-A1-102005 013 420
- DE-B4- 19 882 922
- US-A- 4 321 221
- US-A1- 2004 126 579

## Beschreibung

Die vorliegende Erfindung betrifft ein Funktionslagenherstellungsverfahren, bei dem aus wenigstens einem Kunststoffausgangsmaterial Kunststofffasern ausgebildet werden, wobei das Kunststoffausgangsmaterial zu einer Kunststoffmasse geschmolzen und die Kunststoffmasse in einem Verarbeitungstemperaturbereich gehalten wird, der ein Temperaturbereich zwischen der Schmelztemperatur und einer Vernetzungstemperatur ist und in dem die Kunststoffmasse fließfähig bleibt, und aus der Kunststoffmasse die Kunststoffasern ausgebildet werden, ohne dass in dem Verarbeitungstemperaturbereich eine chemische Härtungsreaktion und räumliche Vernetzung der Kunststoffmasse zu einem Duroplast beginnt, sowie eine Funktionslage, welche wenigstens ein Vlies oder Faserflor aus abgelegten Kunststofffasern aufweist, und einen aus wenigstens einer Funktionslage ausgebildeten Faserverbundwerkstoff.

Faserverbundkunststoffe sind je nach Faser- und Matrixart teilweise sehr kostenintensiv. Selbst preiswerte Varianten, die beispielsweise auf Basis von Glasfasern oder Polypropylen hergestellt werden, sind in der Regel teurer als Stahl. Zu den Materialkosten addieren sich noch hohe Fertigungskosten bei der Bauteilherstellung, die je nach Verfahren und Stückzahl bei bis zu 80 % der Gesamtkosten liegen. Deshalb besitzen Faserverbundkunststoffe, in welche als Matrixmaterial eine Funktionslage aus Kunststofffasern eingearbeitet ist, aufgrund ihrer physikalischen Eigenschaften und der Möglichkeit zur Energieersparnis bei daraus gefertigten Bauteilen eine hohe Attraktivität für die Verwendung im Leichtbau.

Duroplastische Laminate können aus vorimprägnierten Prepregs gefertigt werden. In den meisten Fällen werden sie jedoch in diversen Nassverfahren wie Handlaminieren, Pressoder Injektionsverfahren hergestellt. Die Harz-Härtergemische liegen dabei in der Regel bei Raumtemperatur in flüssiger Form vor. Der Tränkprozess des trockenen Laminataufbaus ist zeit- und kostenintensiv.

Das flüssige Harz-Härter-Gemisch liegt z. B. in Kanistern oder Fässern vor. Beispielsweise wird beim RTM (Resin Transfer Moulding)-Verfahren ein flüssiges Harz-Härter-Gemisch als Matrixmaterial aus einer Misch- und Dosieranlage mit Druck in ein geschlossenes Werkzeug, in das vorher wenigstens eine trockene Lage, wie ein Gewebe oder Gelege, eingebracht wurde, injiziert. Dabei muss das Matrixmaterial von einer Angussseite über die flächige Ausdehnung des herzustellenden Bauteils hin den Widerstand der trockenen Lage überwinden. Die Prozesszeit ist u. a. abhängig von der Bauteilgröße, der Viskosität der verwendeten Harzsysteme und der Permeabilität der zu tränkenden Textilstrukturen. Durch Verwendung von Hochdruck-RTM-Anlagen kann die Prozesszeit gesenkt und die Prozesssicherheit erhöht werden. Hochdruckinjektionsanlagen sind jedoch extrem kostenintensiv und setzen in der Regel Pressen zum Zuhalten der Werkzeuge voraus.

Alternativ sind zur Ausbildung ausgewählter Composite-Werkstoffe auch bereits pulverförmige epoxidharzbasierte Harz-Härter-Systeme zum Einsatz gekommen. Dabei wurden textile Halbzeuge unmittelbar nach dem Herstellungsprozess auf der Textilmaschine mit dem Harz-Härter-System bepulvert oder besprüht, wobei eine Kontamination der Maschinen nicht vermeidbar war. Das Personal musste Atemschutz tragen.

Für die Fertigung von Preforms ist es zudem üblich, textile Halbzeuge mit thermisch aktivierbaren Bindern auszurüsten. Das Bebindern ist ein zusätzlicher Arbeitsgang, bei dem das Bindermaterial als weitere Materialkomponente eine Störstelle im auszubildenden Laminat bildet, die den Harzfluss bei Injektionsprozessen und auch die Laminateigenschaften negativ beeinflussen kann.

Darüber hinaus sind aus dem Stand der Technik aus Kunststofffasern bestehende Garne bekannt und für verschiedenste Anwendungen etabliert. Auch hier besteht jedoch ein Bedarf, solche Garne möglichst preiswert und erhöhter Funktionalität zur Verfügung stellen zu können.

In der Druckschrift US 2004 / 0 126 579 A1 ist ein Verfahren zur Herstellung von aus einem Duroplast und einem Thermoplast bestehenden Fasern beschrieben. Zur Herstellung der Fasern bzw. eines Fasergeleges wird in Trichter ein duroplastischer bzw. ein thermoplastischer Kunststoff eingebracht. Mittels Extrudern werden die Kunststoffe zu einer Austrittsdüse befördert, aus welcher die Fasern austreten. Unterhalb der Austrittsdüse ist eine Oberfläche vorgesehen, auf welcher die Fasern zu einer Bahn abgelegt werden. Diese Bahn wird durch Verbindungsrollen verfestigt.

In der Druckschrift US 2004 / 0 126 579 A1 findet die Faserbildung bei einer Temperatur statt, welche unterhalb einer Vernetzungstemperatur des Duroplasts liegt. Erst wenn die Fasern keinen Kontakt mehr zu der Faserextrusionsvorrichtung haben, werden die Fasern einer Energiequelle ausgesetzt, welche die Vernetzung des Duroplasts bewirkt. Die Aktivierung der Aushärtereaktion erfolgt unmittelbar nach dem Austritt der Fasern aus der Spinndüse durch die Energiequelle noch vor dem Ablegen der Fasern zu der Bahn. Aus den bereits ausgehärteten Fasern kann eine Bahn ausgebildet werden, die beispielsweise als Schicht eines Laminates verwendet werden kann. Ferner können die ausgebildeten Fasern auch zu einem Garn weiterverarbeitet werden.

In der Druckschrift DE 198 82 922 B4 ist ein Verfahren zur Herstellung von duroplastischen Fasern und eines aus diesen Fasern hergestellten Vliesstoffs beschrieben. Dabei wird ein durch Wärme aushärtbares Ausgangsmaterial (Vorpolymer) in einen Vorratsbehälter eingebracht. Das Ausgangsmaterial befindet sich typischerweise in einem fluiden Zustand. Als Ausgangsmaterial kann jedoch auch ein Feststoff mit geringem molekularen Gewicht verwendet werden. Das Ausgangsmaterial wird mittels eines Extruders zu einer Schmelzblasdüse transportiert, welche Kapillaren aufweist, durch welche die polymere Mischung austritt. Die durch die Schmelzblasdüse ausgebildeten Fasern werden unter Ausbildung eines fasrigen Vliesstoffes auf einem unterhalb der Schmelzblasdüse angeordneten Endlosband abgelegt.

In der Druckschrift DE 198 82 922 B4 werden die Fasern unmittelbar nach dem Austritt aus der Schmelzblasdüse 14 und vor Ablage auf einer Sammelvorrichtung, d. h. dem Endlosband, durch eine Energiequelle behandelt, wodurch die vorpolymere Mischung zu einem Polymer erstarrt und/oder aushärtet. Diese Energiequelle kann beispielsweise eine Gasquelle sein, welche warmes Gas zu den Fasern führt. Um eine Reaktion des Ausgangsmaterials während des Extrusionsprozesses zu vermeiden und damit zu verhindern, dass sich das Material bereits in der Apparatur verfestigt, können in der Schmelzblasdüse Gaskammern vorgesehen sein, welche ein kaltes Gas führen, das der Temperierung der Schmelzblasdüse dient.

Die Druckschrift US 4,321,221 A1 beschreibt ein Verfahren zum Herstellen von duroplastischen Fasern. Die Fasern werden mittels eines Extruders aus einer Harz-Härter-Mischung hergestellt. Die Harz-Härter-Mischung wird im Extruder bei einer Temperatur zwischen 100 °C und 130 °C gehalten, um ein Aushärten des Harzes beim Durchlaufen von Düsen zu verhindern. Das eigentliche Aushärten erfolgt erst in einer sich an die Extrudervorrichtung anschließenden Wärmekammer. Die ausgehärteten Fasern können abschließend auf eine Spule 22 aufgewickelt werden.

Es ist daher die Aufgabe der vorliegenden Erfindung, ein Funktionslagenherstellungsverfahren, eine damit herstellbare Funktionslage und einen aus der Funktionslage herstellbaren Faserverbundwerkstoff vorzuschlagen, die mit verringerten Kosten realisierbar sind und welche eine erhöhte Funktionalität zur Verfügung stellen.

Die Aufgabe wird zum einen durch ein Funktionslagenherstellungsverfahren der eingangs angegebenen Art gelöst, bei dem als Kunststoffausgangsmaterial ein bei 40 °C festes, duroplastisch basiertes Harz-Härter-Gemisch verwendet wird und die Kunststofffasern zu einem Vlies oder Faserflor abgelegt werden, wobei das/der aus den Kunststofffasern ausgebildete Vlies oder Faserflor noch nicht aus Duroplast besteht, wobei das Kunststoffausgangsmaterial zwischen 40 °C und 90 °C schmilzt und/oder erst oberhalb von 90 °C vernetzt.

Bei der vorliegenden Erfindung ist die noch nicht zu einem Duroplast gehärtete und vernetzte, fließfähige oder in den erkalteten Kunststofffasern vorliegende Kunststoffmasse ein noch vernetzbares, thermisch gekapseltes Hybridsystem.

Es kommt also bei dem erfindungsgemäßen Verfahren ein während der Kunststofffaserherstellung noch nicht zu einem Duroplast ausgehärtetes Kunststoffausgangsmaterial zum Einsatz. Das Kunststoffausgangsmaterial wird nur so weit erwärmt, dass die daraus entstehende Kunststoffmasse fließfähig und damit zu Kunststofffasern verarbeitbar ist. Die fließfähige Kunststoffmasse ist viskos, also von ihrer Konsistenz beispielsweise honigartig. Jedoch sind die in der fließfähigen Kunststoffmasse enthaltenen Komponenten noch reaktionsfähig. Die Härtungsreaktion zwischen diesen Komponenten hat in dieser fließfähigen Kunststoffmasse noch nicht eingesetzt. Dadurch, dass sich in der Kunststoffmasse noch kein Duroplast, das typischerweise nach dessen Erkalten nicht mehr aufschmelzbar ist, ausgebildet hat, ist es erst möglich, die Kunststoffmasse maschinell zu Kunststoffasern verarbeiten und daraus das Vlies bzw. den Faserflor auszubilden. Auch die ausgebildeten Kunststofffasern und das/der daraus ausgebildete Vlies bzw. Faserflor bestehen noch nicht aus Duroplast. Obgleich also bei dem erfindungsgemäßen Funktionslagenherstellungsverfahren ein nach entsprechender Temperaturbeaufschlagung ein Duroplast ausbildendes Kunststoffausgangsmaterial zum Einsatz kommt, ist das Verfahren reproduzierbar an einer Anlage ausführbar, ohne dass Schaden an der Anlage durch hartgewordenes Duroplastmaterial entsteht.

Gegenüber der Verwendung duroplastischer Prepregs liegen die Vorteile des erfindungsgemäßen Verfahrens insbesondere in der Klebfreiheit, dem Wegfall der Kühlung und Lagerhaltung mit Überwachung und Dokumentation der Auftauphasen des Harz-Härter-Gemisches sowie in der reduzierten Umweltbelastung durch effizienten Materialeinsatz und Vermeidung von Abfall und Verschnitt. Das/der in dem erfindungsgemäßen Verfahren ausgebildete Vlies bzw. Faserflor ist ein Feststoffsystem, das bei Raumtemperatur praktisch unbegrenzt lagerfähig ist. Die erfindungsgemäß ausgebildete Funktionslage hat zudem den entscheidenden Vorteil, dass sie umformbar ist, was bisher nur thermoplastisch basierten Faserverbundwerkstoffen vorbehalten war. Erst in einem letzten Prozessschritt erfolgt die endgültige Aushärtung und Vernetzung zum Formteil.

Die aus der fließfähigen Kunststoffmasse gewonnenen Kunststofffasern werden dann zu einem Vlies bzw. Faserflor abgelegt. Das/der ausgebildete Vlies bzw. Faserflor ist daraufhin textiltechnologischen Verarbeitungsschritten, wie Zuschnitt, Konfektionierung, Stapelbildung und Preforming, zugänglich. Die Kunststofffasern des Vlieses/Faserflors sind in fester Form vorliegende, aufschmelzbare Fasern. Diese Fasern besitzen den Vorteil, dass von ihnen eine nur geringe bis keine Emission umwelt- oder gesundheitsgefährdender Substanzen ausgeht. Ein solches/r Vlies/Faserflor kann beispielsweise als Lage in einen Lagen- bzw. Laminataufbau eingebracht und mit den weiteren Lagen des Lagenaufbaus so stark erwärmt und dabei verflüssigt werden, dass sich ein Verbundwerkstoff ausbildet, dessen Matrix der beim Erkalten der erhitzten Vlies- bzw. Faserflorlage einen Duroplastwerkstoff ausbildet. Durch die vorgelagerte Integration der Vlies- bzw. Faserflorlage als Matrix in einen trockenen Laminataufbau vereinfacht sich der Tränkungsprozess durch starke Reduzierung der Fließwege auf die Bauteilwandstärke. Bekannte Kunststoffausgangsmaterialien zur Herstellung von Duroplasten liegen zumeist in flüssiger Form mit niedriger Viskosität vor. Um in dem erfindungsgemäßen Verfahren aus Duroplast ausbildendem Kunststoffausgangsmaterial mit nur geringer Abwandlung bekannter textiltechnologischer Verfahrenstechnik Kunststofffasern ausbilden zu können, ist es in dem erfindungsgemäßen Verfahren jedoch vorgesehen, als Kunststoffausgangsmaterial ein noch nicht zu einem Duroplast ausgehärtetes Feststoffsystem zu verwenden. Das Feststoffsystem kann beispielsweise als Granulat und/oder Pulver oder anderen gut für eine Vermischung von Komponenten des Kunststoffausgangsmaterials geeigneten festen Ausgangsstoffen ausgebildet sein. Grundsätzlich kann das Kunststoffausgangsmaterial auch zumindest teilweise aus Folie oder Folienstücken ausgebildet sein. Ist das Feststoffsystem ein Granulat oder Pulver, lässt es sich vorteilhaft lagern, hinsichtlich seiner Anteile gut dosieren und einfach in eine Anlagenkomponente zur Erwärmung einfüllen.

Bei dem erfindungsgemäßen Verfahren werden die Bestandteile des als Feststoffsystem ausgebildeten Kunststoffausgangsmaterials so ausgewählt, dass das Kunststoffausgangsmaterial zwischen 40 °C und 90 °C schmilzt und/oder erst oberhalb von 90 °C vernetzt. Dies kann durch Einsatz entsprechender Inhibitoren erreicht werden.

Bei dem erfindungsgemäßen Verfahren kommt als Kunststoffausgangsmaterial ein unterhalb, bei und etwas oberhalb von Raumtemperatur, also bis 40 °C, festes, duroplastisch basiertes Harz-Härter-Gemisch, wie beispielsweise ein epoxidbasiertes Harz-Härter-Gemisch, zum Einsatz. Dem Harz-Härter-Gemisch können noch Füllstoffe und/oder Additive beigemischt werden. Duroplastisch basierte Feststoff-Harz-Härter-Gemische befinden sich etwas oberhalb von Raumtemperatur, wie bis 40 °C, im festen Aggregatzustand und liegen zweckmäßigerweise als Pulver oder Granulat vor. Epoxidbasierte Harz-Härter-Gemische schmelzen bei Erwärmung. Sind die epoxidbasierten Harz-Härter-Gemische zudem entsprechend inhibiert, kann die Härtungsreaktion unterhalb einer bestimmten Schmelztemperatur unterdrückt werden.

Aus einem geschmolzenen epoxidbasierten Harz-Härter-Gemisch können unter bestimmten technologischen Voraussetzungen Fasern gesponnen werden. Um diesen technologischen Schritt reproduzierbar vornehmen zu können, wird erfindungsgemäß die Harz-Härter-Gemisch-Schmelze während der Verarbeitung zu Kunststofffasern in einem definierten Temperaturbereich zwischen der Schmelztemperatur und einer Vernetzungstemperatur gehalten, der vorliegend als Verarbeitungstemperaturbereich bezeichnet wird. Die erfindungsgemäß aus der Harz-Härter-Gemisch-Schmelze gewonnenen Kunststofffasern sind also auch nach ihrem Erkalten bei Erhitzung auf eine Temperatur oberhalb des Verarbeitungstemperaturbereiches zu einem Duroplast umsetzbar. Sie sind textilen Prozessen zugänglich und können zu Garnen weiterverarbeitet oder, wie es in der vorliegenden Erfindung der Fall ist, zu der Herstellung einer Funktionslage verwendet werden.

Die Funktionslage kann beispielsweise zur Herstellung eines verfestigten Vliesstoffes verwendet werden.

Die Funktionslage und/oder der verfestigte Vliesstoff kann wiederum zur Compositeoder Bauteilherstellung verwendet werden, wobei die erfindungsgemäß bei der Funktionslagenherstellung ausgebildeten, zum Duroplast umsetzbaren Kunststofffasern wieder aufgeschmolzen und auf eine Temperatur oberhalb des Verarbeitungstemperaturbereiches erwärmt werden. Die danach erkaltete epoxidbasierte Harz-Härter-Gemisch-Schmelze erhärtet zu einem Duroplast, also einem Kunststoff, der nach seiner Aushärtung nicht mehr verformt werden kann, also auch nicht mehr schmilzt.

In einer favorisierten Ausführungsform des erfindungsgemäßen Verfahrens kommt zur Ausbildung der Kunststofffasern ein Extrusionsvliesstoffverfahren zum Einsatz. Bei diesem Extrusionsvliesstoffverfahren wird das Kunststoffausgangsmaterial in einem Extruder in die fließfähige Kunststoffmasse transformiert und die fließfähige Kunststoffmasse nachfolgend durch eine Spinndüse gepresst und mit Luft zu den Kunststofffasern verblasen. In dem Extruder erfolgt eine Aufschmelzung des Kunststoffausgangsmaterials, gegebenenfalls unter Zugabe von Füllstoffen und/oder Additiven, wobei der Prozess insbesondere ein Durchmischen, Fördern und Aufschmelzen des Kunststoffausgangsmaterials zu der fließfähigen Kunststoffmasse umfasst.

Bei dem Extrusionsvliesstoffverfahren kann beispielsweise eine sogenannte Meltblown-Anlage zum Einsatz kommen, auf welcher die fließfähige Kunststoffmasse zu Fasern versponnen wird. Beim Meltblown-Verfahren wird in einem Extruder aufgeschmolzenes Pulver oder Granulat des Kunststoffausgangsmaterials über eine Spinnpumpe direkt in eine Düse oder einen Düsenblock gefördert. Nach dem Austritt durch die Düsenspitze oder den Düsenblock wird das geschmolzene Kunststoffausgangsmaterial durch komprimierte Prozessluft verstreckt. Die entstehenden Kunststofffasern werden daraufhin wirr als Vlies oder Faserflor beispielsweise auf einer Ablage abgelegt. Das/der Vlies oder Faserflor kann beispielsweise ein Flächengewicht im Bereich von 3 bis 100 g/m² aufweisen. Zur Herstellung von Laminaten kann die Meltblown-Anlage auch um eine Abrollstation vor und hinter der Düse bzw. dem Düsenblock erweitert werden.

In speziellen Ausgestaltungen des erfindungsgemäßen Verfahrens werden den Kunststofffasern während oder nach ihrer Ablage als Vlies oder Faserflor Verstärkungsfasern in Form von Glasfasern und/oder Carbonfasern und/oder Aramidfasern und/oder Basaltfasern und/oder Pflanzenfasern zugeführt.

Vorzugsweise werden dann die Kunststofffasern auf einer sich in einer Förderrichtung bewegenden Ablage als Funktionslage abgelegt. Hierdurch kann kontinuierlich eine Funktionslage oder ein die Funktionslage aufweisender Lagenaufbau ausgebildet werden, die/der daraufhin beispielsweise als Rollenware zur Verfügung gestellt werden kann und/oder als textile Matrixlage oder textiler Matrixlagenaufbau in einen Lagenaufbau eines Halbzeuges oder Faserverbundwerkstoffes bzw. Composites integriert werden kann. Als Ablage wird vorzugsweise ein luftdurchlässiges Siebband verwendet.

Die Ablage bildet vorzugsweise einen nichthaftenden Untergrund für das/den darauf abgelegten Vlies/Faserflor, sodass dieser problemlos von der Ablage abgezogen werden kann. In bestimmten Anwendungsfällen der Erfindung, wie beispielsweise bei der Herstellung von Hybridvliesstoffen aus wenigstens einer erfindungsgemäßen Funktionslage, kann als Material für die Ablage jedoch auch gerade ein Material ausgewählt werden, das einen haftenden Untergrund für das/den darauf abgelegten Vlies/Faserflor ausbildet. Derartige Untergründe können z. B. Untergründe aus Glas- und/oder Carbonfaservliesstoff und/oder Gewebe und/oder Gelege aus Verstärkungsfasern sein. Ferner können auch ein oder mehrere Lagen aus Glas- und/oder Carbonfaservliesstoff und/oder aus Gewebe und/oder Gelege aus Verstärkungsfasern als Beschichtungslage(n) auf das/dem Vlies/Faserflor aufgebracht werden.

Das/der bei dem erfindungsgemäßen Funktionslagenherstellungsverfahren ausgebildete Vlies/Faserflor hält in sich aufgrund der klebenden Kunststofffasern in gewissen Grenzen zusammen. Das/der Vlies/Faserflor ist direkt nach dessen Ablage ein biegeschlaffes Material. Eine erhöhte Stabilität und damit eine leichtere Transportierbarkeit und Weiterverarbeitbarkeit des Vlieses/Faserflors erreicht man dann, wenn die Funktionslage zu einem Vliesstoff verfestigt wird. Für eine solche Verfestigung können unterschiedlichste Vliesstoffverfestigungsverfahren, wie thermische Verfestigungsverfahren, wie beispielsweise Verpressen, Kalandern oder Heißluftverfestigung, und/oder mechanische Verfestigungsverfahren, wie beispielsweise Vernadeln, Wasserstrahlverfestigung oder alternative Verfahren, allein oder in Kombination eingesetzt werden. Der ausgebildete Vliesstoff kann allein oder in Kombination mehrerer Vliesstofflagen beispielsweise ein Flächengewicht in einem Bereich von 10 bis 300 g/m² aufweisen.

Die Aufgabe wird ferner durch eine Funktionslage der eingangs genannten Gattung gelöst, bei der die Funktionslage mit einem Verfahren nach wenigstens einem der Ansprüche 1 bis 4 hergestellt ist und die Kunststofffasern des Vlieses oder Faserflors wenigstens teilweise aus einer geschmolzenen und daraufhin erkalteten, aber noch nicht zu Duroplast vernetzten Kunststoffmasse aus einem bis 40 °C festen und oberhalb eines Verarbeitungstemperaturbereiches, in dem die Kunststoffmasse fließfähig ist, Duroplast ausbildenden, wenigstens ein duroplastisch basiertes Hartz-Härter-Gemisch aufweisendes Kunststoffausgangsmaterial ausgebildet sind.

Die Kunststofffasern der Funktionslage sind also aus einem noch nicht zu einem Duroplast ausgehärteten Kunststoffausgangsmaterial ausgebildet. Das Kunststoffausgangsmaterial ist hierfür nur so weit erwärmt und dadurch fließfähig gemacht worden, dass es zu Kunststofffasern verarbeitbar ist. Die in den Kunststofffasern enthaltenen Komponenten sind noch reaktionsfähig. Die Härtungsreaktion zwischen diesen Komponenten hat in den Kunststofffasern noch nicht eingesetzt.

In einer bevorzugten Ausführungsform der erfindungsgemäßen Funktionslage sind die Kunststofffasern aus extrudiertem, zu Kunststofffasern verzogenem, wenigstens teilweise Duroplast ausbildenden Kunststoffausgangsmaterial ausgebildet.

Das Kunststoffausgangsmaterial weist wenigstens ein duroplastbasiertes, beispielsweise epoxidbasiertes, bis 40 °C festes Harz-Härter-Gemisch auf. Diesem Harz-Härter-Gemisch können noch Füllstoffe und/oder Additive beigemischt oder hinzugefügt sein.

In speziellen Ausführungsformen der erfindungsgemäßen Funktionslage weist das Vlies oder der Faserflor beispielsweise zusätzlich zu den aus dem epoxidbasierten Harz-Härter-Gemisch ausgebildeten Kunststofffasern Verstärkungsfasern in Form von Glasfasern und/oder Carbonfasern und/oder Aramidfasern und/oder Basaltfasern und/oder diverser Pflanzenfasern auf. Wird ein solches/r Vlies/Faserflor eingesetzt, kann die daraus ausgebildete Funktionslage als ein Hybridfunktionslagenwerkstoff mit auf den speziellen Anwendungsfall abgestimmten Eigenschaften zur Verfügung gestellt werden.

Die Aufgabe wird zudem durch einen Faserverbundwerkstoff gelöst, dessen Matrix mit wenigstens einer erfindungsgemäßen Funktionslage ausgebildet ist. Eine erfindungsgemäße Funktionslage kann also als Matrixmaterial in dem erfindungsgemäßen Faserverbundwerkstoff eingesetzt werden. So ist zum Beispiel eine Integration wenigstens einer erfindungsgemäßen Funktionslage in einen Lagenaufbau von Laminaten möglich, wodurch die Matrix in Form der flächig vorliegenden Funktionslage in dem jeweiligen Laminat bereits flächig verteilt ist und Injektionsprozesse nicht erforderlich sind. Als weitere Lagen des Faserverbundwerkstoffes können beispielsweise Lagen von Carbonmaterial, Basaltfasermaterial oder Glasfasermaterial verwendet werden, zwischen welche ein oder mehrere Lagen der erfindungsgemäßen Funktionslage eingebracht werden können und welche sich nach entsprechender thermischer Aktivierung der Komponenten der Funktionslage, also bei Erwärmung auf eine Temperatur, oberhalb der eine Vernetzungsreaktion in der Funktionslage eintritt, mit dem Matrixmaterial verbinden.

Ein besonders geeignetes Verfahren zur Herstellung eines erfindungsgemäßen Faserverbundwerkstoffes in Form eines oben erläuterten Laminates ist das Heiß-Pressverfahren. Dabei sind die Flächengewichte der verwendeten Lagen vorzugsweise so zu wählen, dass ein Faservolumengehalt im Bereich von 40 bis 60 % im fertigen Laminat erreicht wird.

Beispielsweise kann der Faserverbundwerkstoff einen alternierenden Lagenaufbau aus wenigstens einer erfindungsgemäßen Funktionslage und Gewebelagen, die miteinander verpresst sind, aufweisen.

In einem Garnherstellungsverfahren, bei dem als Kunststoffausgangsmaterial wenigstens ein bis 40 °C festes Material oder Materialgemisch verwendet wird, wird das Kunststoffausgangsmaterial zu einer Kunststoffmasse geschmolzen und die Kunststoffmasse in einem Verarbeitungstemperaturbereich gehalten, in dem die Kunststoffmasse fließfähig bleibt, und werden aus der Kunststoffmasse die Kunststoffasern ausgebildet, ohne dass in dem Verarbeitungstemperaturbereich eine chemische Härtungsreaktion und räumliche Vernetzung der Kunststoffmasse zu einem Duroplast beginnt.

Bei dem Garnherstellungsverfahren wird also wenigstens ein erst bei Temperaturbeaufschlagung oberhalb eines Verarbeitungstemperaturbereiches ein Duroplast ausbildendes Kunststoffausgangsmaterial verwendet, das bis zu einer solchen Temperatur erwärmt wird, dass sich daraus aus eine innerhalb des Verarbeitungstemperaturbereiches fließfähige Kunststoffmasse ergibt, ohne dass diese bei ihrer Erkaltung zu den Kunststofffasern zu einem Duroplast vernetzt.

Es kommt somit bei dem Garnherstellungsverfahren ein noch nicht zu einem Duroplast ausgehärtetes Kunststoffausgangsmaterial zum Einsatz. Das Kunststoffausgangsmaterial wird nur so weit erwärmt, dass die daraus entstehende Masse fließfähig und damit zu Kunststofffasern verarbeitbar ist. Die fließfähige Kunststoffmasse ist viskos, also von ihrer Konsistenz beispielsweise honigartig. Jedoch sind die in der fließfähigen Kunststoffmasse enthaltenen Komponenten noch reaktionsfähig. Die Härtungsreaktion zwischen diesen Komponenten hat in dieser fließfähigen Kunststoffmasse noch nicht eingesetzt. Dadurch dass sich noch kein Duroplast, das typischerweise nach dessen Erkalten nicht mehr aufschmelzbar ist, ausgebildet hat, ist es möglich, die Kunststoffmasse maschinell zu Kunststofffasern verarbeiten und daraus das Garn auszubilden. Obgleich also bei dem Garnherstellungsverfahren ein nach entsprechender Temperaturbeaufschlagung ein Duroplast ausbildendes Kunststoffausgangsmaterial zum Einsatz kommt, ist es, da bei dem Verfahren ein Verarbeitungstemperaturbereich nicht überschritten wird, reproduzierbar an einer Anlage ausführbar, ohne dass Schaden an der Anlage durch hartgewordenes Duroplastmaterial entsteht. Die aus der fließfähigen Kunststoffmasse gewonnenen Kunststofffasern werden dann zu einem Garn versponnen.

Ein mit dem Garnherstellungsverfahren hergestelltes Garn kann als Monofilgarn, aber auch als Multifilamentgarn ausgebildet werden.

Den aus dem erst bei entsprechender Temperaturbeaufschlagung oberhalb des Verarbeitungstemperaturbereiches ein Duroplast ausbildenden Material ausgebildeten Kunststofffasern bzw. dem daraus ausgebildeten Vlies oder Faserflor kann wenigstens ein weiteres Material, wie beispielsweise Verstärkungsfasern, beigemischt werden, wodurch ein Hybridgarn, wie beispielsweise ein Hybridgarn aus duroplastischen Matrix- und Hochleistungsfasern, hergestellt werden kann.

Bei einem Garn, bei dem die Kunststofffasern extrusionsbasierte Kunststofffasern sind, sind die ganz oder teilweise aus noch zu einem Duroplast reaktionsfähigem Material ausgebildet. Die Kunststofffasern, aus dem das Garn ausgebildet ist, sind also aus einem noch nicht zu einem Duroplast ausgehärteten Kunststoffausgangsmaterial ausgebildet. Das Kunststoffausgangsmaterial ist hierfür nur so weit erwärmt und dadurch fließfähig gemacht worden, dass es zu Kunststofffasern verarbeitbar ist. Die in den Kunststofffasern enthaltenen Komponenten sind noch reaktionsfähig. Die Härtungsreaktion zwischen diesen Komponenten hat in den Kunststofffasern noch nicht eingesetzt. Die Kunststofffasern können hierbei allein oder in Mischung mit anderen Fasern oder Garnen oder Spezialfäden zur Garnausbildung verwendet werden.

## Patentansprüche

1. Funktionslagenherstellungsverfahren, bei dem aus wenigstens einem Kunststoffausgangsmaterial Kunststofffasern ausgebildet werden, wobei das Kunststoffausgangsmaterial zu einer Kunststoffmasse geschmolzen und die Kunststoffmasse in einem Verarbeitungstemperaturbereich gehalten wird, der ein Temperaturbereich zwischen der Schmelztemperatur und einer Vernetzungstemperatur ist und in dem die Kunststoffmasse fließfähig bleibt, und aus der Kunststoffmasse die Kunststofffasern ausgebildet werden, ohne dass in dem Verarbeitungstemperaturbereich eine chemische Härtungsreaktion und räumliche Vernetzung der Kunststoffmasse zu einem Duroplast beginnt, und als Kunststoffausgangsmaterial wenigstens ein bis 40 °C festes, duroplastisch basiertes Harz-Härter-Gemisch verwendet wird, und die Kunststofffasern zu einem Vlies oder Faserflor abgelegt werden, wobei die ausgebildeten Kunststofffasern und das/der aus den Kunststofffasern ausgebildete Vlies oder Faserflor noch nicht aus Duroplast bestehen,
**dadurch gekennzeichnet,**
**dass** das Kunststoffausgangsmaterial zwischen 40 °C und 90 °C schmilzt und/oder erst oberhalb von 90 °C vernetzt.

2. Funktionslagenherstellungsverfahren nach Anspruch 1, **dadurch gekennzeichnet, dass** das Kunststoffausgangsmaterial in einem Extruder in die fließfähige Kunststoffmasse transformiert wird und die Kunststofffasern nachfolgend aus der fließfähigen Kunststoffmasse mit einem Extrusionsvliesstoffverfahren ausgebildet werden.

3. Funktionslagenherstellungsverfahren nach Anspruch 2, **dadurch gekennzeichnet, dass** den Kunststofffasern während oder nach ihrer Ablage als Vlies oder Faserflor Verstärkungsfasern in Form von Glasfasern und/oder Carbonfasern und/oder Aramidfasern und/oder Basaltfasern und/oder Pflanzenfasern zugeführt werden.

4. Vliesstoffherstellungsverfahren, **dadurch gekennzeichnet, dass** eine mit einem Funktionslagenherstellungsverfahren nach wenigstens einem der vorhergehenden Ansprüche hergestellte Funktionslage zu einem Vliesstoff verfestigt wird.

5. Compositevorstufenherstellungsverfahren, **dadurch gekennzeichnet, dass** einem mit einem Vliesstoffherstellungsverfahren nach Anspruch 4 hergestellten verfestigten Vliesstoff Verstärkungsfasern und/oder Verstärkungslagen als ein oder mehrere Auflagen zugeführt werden.

6. Funktionslage, welche wenigstens ein Vlies oder Faserflor aus abgelegten Kunststofffasern aufweist, **dadurch gekennzeichnet, dass** die Funktionslage mit einem Verfahren nach wenigstens einem der Ansprüche 1 bis 3 hergestellt ist und die Kunststofffasern des Vlieses oder Faserflors wenigstens teilweise aus einer geschmolzenen und daraufhin erkalteten, aber noch nicht zu Duroplast vernetzten Kunststoffmasse aus einem wenigstens ein duroplastisch basiertes Harz-Härter-Gemisch aufweisenden, bis 40 °C festen und oberhalb eines Verarbeitungstemperaturbereiches, in dem die Kunststoffmasse fließfähig ist, Duroplast ausbildenden, Kunststoffausgangsmaterial ausgebildet sind.

7. Funktionslage nach Anspruch 6, **dadurch gekennzeichnet, dass** in das Vlies oder den Faserflor Verstärkungsfasern in Form von Glasfasern und/oder Carbonfasern und/oder Aramidfasern und/oder Basaltfasern und/oder Pflanzenfasern eingebunden sind.

8. Funktionslage nach wenigstens einem der Ansprüche 6 bis 7, **dadurch gekennzeichnet, dass** die Kunststofffasern extrusionsbasierte Kunststofffasern sind.

9. Faserverbundwerkstoff, dessen Matrix durch wenigstens eine Funktionslage nach wenigstens einem der Ansprüche 6 bis 8 ausgebildet ist.

10. Faserverbundwerkstoff nach Anspruch 9, **dadurch gekennzeichnet, dass** die wenigstens eine Funktionslage geschmolzen und mit wenigstens einem weiteren Material des Faserverbundwerkstoffes beim Erhärten zu einem Duroplast verbunden ist.

11. Faserverbundwerkstoff nach Anspruch 9 oder 10, **dadurch gekennzeichnet, dass**
der Faserverbundwerkstoff einen alternierenden Lagenaufbau aus der wenigstens einen Funktionslage und Gewebelagen aufweist, die miteinander unter Wärmeeinwirkung verpresst sind.

## Claims

1. Functional layer production method, in which plastics fibers are formed from at least one plastics starting material, the plastics starting material being melted into a plastics melt and the plastics melt being kept in a processing temperature range which is a temperature range between the melting temperature and a cross-linking temperature and in which the plastics melt remains flowable, and the plastics fibers being formed from the plastics melt without a chemical hardening reaction and spatial cross-linking of the plastics melt to form a thermoset starting in the processing temperature range, at least one thermoset-based resin-hardener mixture which is solid up to 40°C is used as the plastics starting material, and the plastics fibers are deposited to form a non-woven or a fiber web, the formed plastics fibers and the non-woven or the fiber web formed from the plastics fibers not yet consisting of thermoset,
**characterized in that**
the plastics starting material melts between 40°C and 90°C and/or cross-links only above 90°C.

2. Functional layer production method according to claim 1, **characterized in that** the plastics starting material is transformed into the flowable plastics melt in an extruder and the plastics fibers are subsequently formed from the flowable plastics melt using an extrusion nonwoven method.

3. Functional layer production method according to claim 2, **characterized in that** reinforcing fibers in the form of glass fibers and/or carbon fibers and/or aramid fibers and/or basalt fibers and/or plant fibers are added to the plastics fibers during or after their deposition as a non-woven or a fiber web.

4. Nonwoven production method, **characterized in that** a functional layer produced using a functional layer production method according to at least one of the preceding claims is consolidated to form a nonwoven.

5. Composite precursor production method, **characterized in that** reinforcing fibers and/or reinforcing layers are added as one or more overlays to a consolidated nonwoven produced using a nonwoven production method according to claim 4.

6. Functional layer which has at least one non-woven or fiber web consisting of deposited plastics fibers, **characterized in that** the functional layer is produced using a method according to at least one of claims 1 to 3 and the plastics fibers of the non-woven or fiber web are at least partially formed from a melted and then cooled plastics melt which has not yet cross-linked to form a thermoset and which consists of a plastics starting material which has at least one thermoset-based resin-hardener mixture, is solid up to 40°C and forms a thermoset above a processing temperature range in which the plastics melt is flowable.

7. Functional layer according to claim 6, **characterized in that** reinforcing fibers in the form of glass fibers and/or carbon fibers and/or aramid fibers and/or basalt fibers and/or plant fibers are incorporated into the unbonded web or fiber web.

8. Functional layer according to at least one of claims 6 to 7, **characterized in that** the plastics fibers are extrusion-based plastics fibers.

9. Fiber composite material, the matrix of which is formed by at least one functional layer according to at least one of claims 6 to 8.

10. Fiber composite material according to claim 9, **characterized in that** the at least one functional layer is melted and is connected to at least one further material of the fiber composite material during hardening to form a thermoset.

11. Fiber composite material according to either claim 9 or claim 10, **characterized in that** the fiber composite material has an alternating layer structure consisting of the at least one functional layer and fabric layers which are pressed together under the action of heat.

## Revendications

1. Procédé de fabrication de couches fonctionnelles, dans lequel des fibres synthétiques sont formées à partir d'au moins une matière première synthétique, la matière première synthétique étant fondue pour obtenir une masse synthétique et la masse synthétique étant maintenue dans une gamme de températures de traitement qui est une gamme de températures comprise entre la température de fusion et une température de réticulation et dans laquelle la masse synthétique reste fluide, et les fibres synthétiques étant formées à partir de la masse synthétique sans que soient initiées, dans la gamme de températures de traitement, une réaction de durcissement chimique et une réticulation spatiale de la masse synthétique pour former un plastique thermodurcissable, au moins un mélange résine-durcisseur solide jusqu'à 40 °C, à base thermodurcissable, étant utilisé comme matière première synthétique, et les fibres synthétiques étant déposées pour former un non-tissé ou un voile de fibres, les fibres synthétiques formées et le non-tissé ou le voile de fibres réalisé à partir des fibres synthétiques n'étant pas encore constitués de plastique thermodurcissable,
**caractérisé en ce**
**que** la matière première synthétique fond entre 40 °C et 90 °C et/ou est réticulée seulement au-dessus de 90 °C.

2. Procédé de fabrication de couches fonctionnelles selon la revendication 1, **caractérisé en ce que** la matière première synthétique est transformée en la masse synthétique fluide dans une extrudeuse et que les fibres synthétiques sont ensuite formées à partir de la masse synthétique fluide au moyen d'un procédé d'extrusion de non-tissé.

3. Procédé de fabrication de couches fonctionnelles selon la revendication 2, **caractérisé en ce que** des fibres de renforcement sous forme de fibres de verre et/ou de fibres de carbone et/ou de fibres d'aramide et/ou de fibres de basalte et/ou de fibres végétales sont ajoutées aux fibres synthétiques pendant ou après leur dépôt en tant que non-tissé ou voile de fibres.

4. Procédé de fabrication de non-tissé, **caractérisé en ce qu'**une couche fonctionnelle fabriquée au moyen d'un procédé de fabrication de couches fonctionnelles selon au moins l'une des revendications précédentes est solidifiée pour former un non-tissé.

5. Procédé de fabrication de précurseurs composites, **caractérisé en ce que** des fibres de renforcement et/ou couches de renforcement en tant qu'un ou plusieurs supports sont ajoutées au tissu non tissé solidifié fabriqué au moyen d'un procédé de fabrication de non-tissé selon la revendication 4.

6. Couche fonctionnelle présentant au moins un non-tissé ou un voile de fibres constitué de fibres synthétiques déposées, **caractérisée en ce que** la couche fonctionnelle est fabriquée au moyen d'un procédé selon au moins l'une des revendications 1 à 3 et que les fibres synthétiques du non-tissé ou du voile de fibres sont au moins partiellement formées à partir d'une masse synthétique fondue puis refroidie, mais pas encore réticulée pour former un plastique thermodurcissable, laquelle masse synthétique est constituée d'une matière première synthétique présentant au moins un mélange résine-durcisseur à base thermodurcissable, solide jusqu'à 40 °C et formant un plastique thermodurcissable au-dessus d'une gamme de températures de traitement dans laquelle la masse synthétique est fluide.

7. Couche fonctionnelle selon la revendication 6, **caractérisée en ce que** des fibres de renforcement sous forme de fibres de verre et/ou de fibres de carbone et/ou de fibres d'aramide et/ou de fibres de basalte et/ou de fibres végétales sont incorporées dans le non-tissé ou le voile de fibres.

8. Couche fonctionnelle selon au moins l'une des revendications 6 à 7, **caractérisée en ce que** les fibres synthétiques sont des fibres synthétiques basées sur une extrusion.

9. Matériau composite fibreux dont la matrice est réalisée par au moins une couche fonctionnelle selon au moins l'une des revendications 6 à 8.

10. Matériau composite fibreux selon la revendication 9, **caractérisé en ce que** l'au moins une couche fonctionnelle est fondue et est reliée à au moins un autre matériau du matériau composite fibreux pendant le durcissement pour former un plastique thermodurcissable.

11. Matériau composite fibreux selon la revendication 9 ou 10, **caractérisé en ce que** le matériau composite fibreux présente une structure de couches alternée constituée de l'au moins une couche fonctionnelle et de couches de tissu, lesquelles sont pressées les unes contre les autres sous l'effet de la chaleur.
